Europäisches Patentamt

European Patent Office

Office européen des brevets

(11) Publication number: **0 170 066**
**B1**

(12) **EUROPEAN PATENT SPECIFICATION**

(45) Date of publication of patent specification: **19.04.89**

(51) Int. Cl.⁴: **H 01 M 2/04**

(21) Application number: **85108033.3**

(22) Date of filing: **13.12.82**

(60) Publication number of the earlier application in accordance with Art. 76 EPC: **0 082 826**

(54) **Lid for lead-accumulators.**

(30) Priority: **21.12.81 IT 8565381**

(43) Date of publication of application:
**05.02.86 Bulletin 86/06**

(45) Publication of the grant of the patent:
**19.04.89 Bulletin 89/16**

(84) Designated Contracting States:
**AT BE CH DE FR GB LI NL SE**

(56) References cited:
**DE-A-2 162 451**
**FR-A-2 476 918**
**GB-A-1 131 556**
**GB-A-2 087 637**
**US-A-3 077 509**
**US-A-3 653 974**
**US-A-3 933 522**
**US-A-4 091 180**

**PATENTS ABSTRACTS OF JAPAN, vol. 4, no.
104 (E-19)1586r, 25th July 1980, page 6 E 19**

(73) Proprietor: **Stocchiero, Olimpio**
**4 Via Kennedy**
**I-36050 Montorso Vicentino (IT)**

(72) Inventor: **Stocchiero, Olimpio**
**4 Via Kennedy**
**I-36050 Montorso Vicentino (IT)**

(74) Representative: **Bonini, Ercole**
**Corso Fogazzaro, 8**
**I-36100 Vicenza (IT)**

Courier Press, Leamington Spa, England.

**Description**

The present invention relates to a lid for accumulators with special characteristics of elasticity.

It is known that in the construction of accumulators the lid of each accumulator element must fulfil two main and essential functions: the first function is that of insuring a perfect seal, thus avoiding possible leaks to the exterior of the electrolyte contained in the accumulator self, said electrolyte being highly corrosive. Besides, only when the seal is perfect is it possible to obtain the automatic levelling of the electrolyte inside the elements with one of the known means. The second function is that of allowing the elongation of the positive pole, which inevitably occurs during the life-span of an accumulator because of well-known electrochemical phenomena.

The necessity of allowing the elongation of the poles is felt mostly in the industrial batteries. In fact, in the industrial batteries, where the elements reach heights up to 650 mm approximately, such phenomenon acquires particular relevance and it is, therefore, necessary to give the poles, and particularly the positive pole, the possibility of stretching, without thereby breaking the lid where they are fixed. This second necessity, in particular, has given rise to different methods of solution.

One of the most frequently used methods consists in the sealing of the area between the lid and the box of the accumulator with a binder of the plastic type, which, while insuring the sealing between the lid and the box, also guarantees a certain amount of elasticity, although it is limited.

This solution is mostly used for automobile accumulators, while it does not solve the problem of the industrial accumulators, particularly of the ones which are meant for the electric traction, since their size in height is considerable.

Another solution which is available on the market consists in the realization in the lid and in the area surrounding the poles of a series of concentric rings, the thickness of which is thin, which make the surface of said area deformable.

In the issue of Patents Abstracts of Japan, Vol. 4, No. 104 (E—19) [1586] of July 25th, 1980, patent No. 55—62657 A is listed, in which, in order to prevent the stress in the joint between the lid and the battery pole, a step is foreseen, the thickness of which is rather thin in comparison with the remaining thickness of the surface of the lid. Such step develops in different forms around the pole.

If making the thickness lighter in the areas which are subject to more tension on one hand allows an area of the lid to move, in order to follow the elongation of the pole, on the other hand it creates very weak areas which are highly subject to rupture.

The purpose of the present invention is that of realizing a lid for accumulators made of plastic material with an elastic and deformable surface, which can follow without damage the push caused by the elongation of the pole.

Another purpose is that of making a lid available with a refilling opening which helps prevent the spilling of electrolyte during the refilling operation and which has at the same time the function of a gasket for the cap which closes the refilling opening.

Accordingly, this invention realizes a lid made of plastic material wherein the deformability and elasticity of the same are obtained by means of the hollow shape of the lid surface with the hollowness turned toward the outside of the accumulator and having, in general, a constant thickness.

The profile of the lid is, therefore, bent from the edges toward the middle, where the poles and the opening for the refilling of the electrolyte are to be found and it is connected to said poles and to the refilling opening.

The invention also foresees a tapered-section ring around the refilling opening, which reduces the spills of electrolyte during the refilling operation and which functions as a gasket for the cap. According to one type of construction, said ring has a tapered section having its taper turned upwards. According to a variation of construction, the section of the ring is tapered downwards and it presents some steps which make it lighter.

With such extremely simple but also extremely functional solution, the purpose is obtained that the elastic tensions which develop because of the thrust of the pole are equally distributed on the entire surface of the lid, rather than on limited areas, as is the case in other solutions. Thus the possibility of ruptures on the lid, actually caused by different amounts of tension on the surface, is eliminated or, anyway, drastically reduced.

Another advantage presented by the solution adopted in the present invention is that, because of its special convex shape, the lid collects on its surface the possible spills of electrolyte from the central cap during the refill of distilled water. The operation of removing and cleaning the spilled liquid, should it occur, is therefore made simpler and the liquid itself is thus prevented from seeping between the accumulators and from settling on the bottom of the housing of the accumulator battery, which, although it is usually made of plastified iron, can be corroded at least at some weak points.

These and other advantages will become more evident by the description of a preferred form of execution of the present invention, which is given by way of example only, but is not meant to limit its scope, and by the enclosed set of drawings, wherein:

Figure 1 represents a top view of the lid being the object of the present invention,

Figure 2 represents a longitudinal cross-section of the lid, following the line A—A,

Figure 3 represents a transverse cross-section of the lid, following the line B—B,

Figures 4 and 5 are two magnified views of the edge of the lid-opening concerning the construction of the ring around the refilling opening.

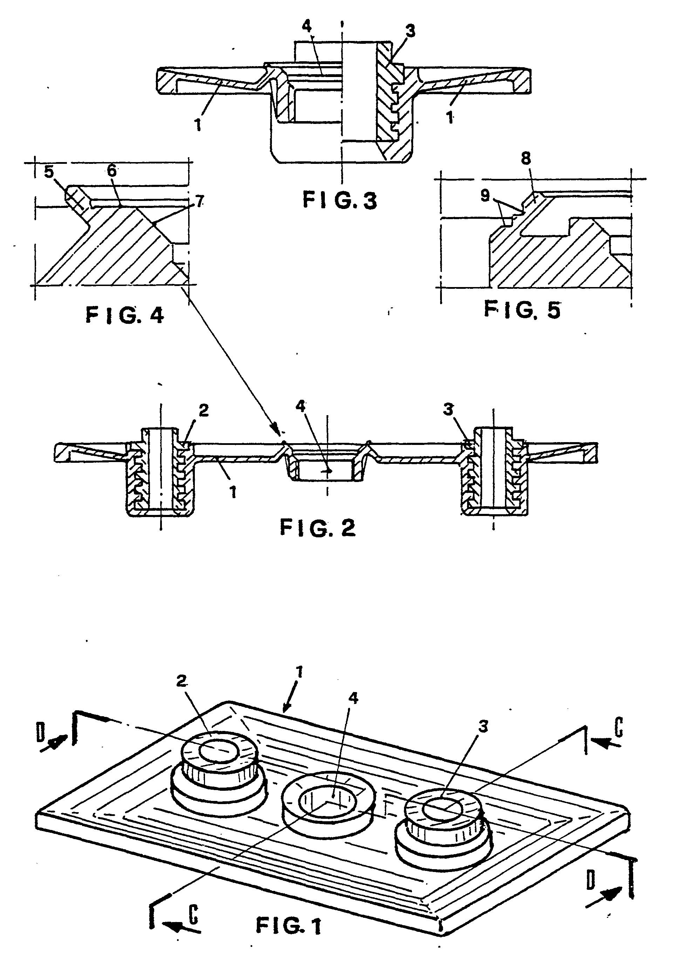

With reference to Figure 2 the cross-section of the lid 1 having a generally hollow profile, the bent of which proceeds in a practically even way from the edges of the lid to the central area, where the poles 2 and 3 and the central opening 4 for the filling and refilling of the electrolyte are to be found.

Of course, the lid profile is connected to the sockets 2 and 3 of the poles (see Figure 2) and to the shape of the electrolyte-filling opening 4. The cross-section B—B represented in Figure 3 shows how the lid profile is hollow also in the transverse direction, besides being hollow in the longitudinal one. The surface thus shaped is of the elastic type and it makes it possible to stand the thrust, due to the expansion of the positive pole, or of the poles in general, because it allows the rise of the lid upwards. The lid, now being hollow, will tend to take a flat shape, or at most a convex one.

By now it has become a common technique in this field, that the lead-sockets 2 and 3 of the poles are drowned in the plastic of the lid during the hot moulding of the same. The lid is then soldered in an autogenous fashion to the accumulator casing along its entire edge, so as to insure a perfect seal.

The poles, which had previously been inserted in the socket-holes, are then soldered to the sockets, after the autogenous soldering of the lid to the casing has already been performed. Thus a stiff connection between the accumulator-lid and the poles is insured, but, as it has been pointed out, even in the stiffness of the junction the possibility of the stretching of the pole will be insured, since the lid will be allowed to heave, because of its structure.

In the lid being the object of the invention a ring having a circular shape and a special cross section and being concentric with the opening for the filling of the electrolyte has been realized directly by moulding. This ring protrudes from the surface of the opening and, therefore, fulfils two functions: the first function is that of building a barrier hindering minor spills, which may occur because of overfilling of the electrolyte during the refilling operation. This is an important feature, especially because such minor spills may create some electric discharge channels between the positive and the negative poles of the accumulator.

The second function is just as important and it is that such ring acts as a gasket for the cap, since it is round and deformable and, therefore, it makes a perfect seal when the cap is tightened.

In Figure 4 and in Figure 5 two of the possible solutions of the profile of this restraining ring are represented. In Figure 4, detail 5 shows the cross-section of the circular ring, having the tapered section turned upwards, which protrudes from the surface 6 of the electrolyte-filling opening 4. Said projection makes it possible to oppose a barrier to possible minor electrolyte spills, when the accumulator is being refilled. Besides, because of the thin thickness of the ring 5, this becomes deformed under the action of the cap covering the opening 4, which, when closed centers itself on the tapered part 7, thereby insuring a perfect seal, as required. This eliminates the need of adding a gasket to the cap, so that the solution presented not only offers the above-described, but is also particularly economical.

Figure 5 presents an alternative solution to the one represented in Figure 4, with the circular ring 8 having the tapered section turned downwards. The profile has a thin thickness and besides it presents some steps 9.

## Claims

1. A lid for accumulator casing made of a plastics material and hot-sealed to the casing of accumulator, characterized by having a practically constant thickness, a central opening (4) for the filling of the electrolyte, sockets (2, 3) for accommodating the poles, a turned-down lip, and a profile which proceeds downwards from the lip towards the sockets, the lid having sufficient elasticity to resist damage due to elongation of the poles.

2. A lid according to claim 1 characterized by the fact that a circular edge (5) defining a frustum-conical space and an upwardly increasing radius is provided around the opening (4) for the filling of electrolyte.

3. A lid according to claim 1 characterized by the fact that a circular edge (8) having one or more steps (9) and defining a frustum-conical space and a downwardly increasing radius, is provided around the opening (4) for the filling of electrolyte.

## Patentansprüche

1. Deckel für Akkumulator-Behälter aus Kunststoff und zum Akkumulator-Behälter heissgeschweisst, dadurch gekennzeichnet, daß er eine praktisch gleichbleibende Dicke, eine zentrale Oeffnung (4) zum Füllen des Elektrolyts, Buchsen (2, 3) zur Aufnahme der Pole, eine nach unten gebogene Lippe, und ein Profil, das nach unten von der Lippe gegen die Buchsen läuft, aufweist, indem der Deckel eine ausreichende Elastizität besitzt, um zur Dehnung der Pole zuzuschreibende Schaden zu überwinden.

2. Deckel nach Anspruch 1, dadurch gekennzeichnet, daß ein runder Rand (5), der einen kegelstumpfen Raum und einen nach oben zunhemenden Radius bestimmt, um die Oeffnung (4) zum Füllen des Elektrolyts vorhanden ist.

3. Deckel nach Anspruch 1, dadurch gekennzeichnet, daß ein runder Rand (8), der eine oder mehrere Stufen (9) aufweist und einen kegelstumpfen Raum und einen nach oben zunehmenden Radius bestimmt, um die Oeffnung zum Füllen des Elektrolyts vorhanden ist.

## Revendications

1. Couvercle pour boîte pour batterie en matériel plastique et soudé à chaud à la boîte pour batterie, caractérisé en ce qu'il présente une épaisseur pratiquement constante, une ouverture centrale (4) pour le remplissage d'électrolyte, des douilles (2, 3) pour le logement des poles, un lèvre plié en bas, et un profil procédant vers le bas du lèvre vers les douilles, le lèvre ayant une élasticité suffisante pour éviter le dommage causé par l'élongation des poles.

2. Couvercle selon la revendication 1, caractérisé en ce qu'un bord circulaire (5) définissant un espace tronc-conique et un rayon croissant vers le haut, est pourvu autour de l'ouverture (4) pour le remplissage de l'électrolyte.

3. Couvercle selon la revendication 1, caractérisé en ce qu'un bord circulaire (8) ayant un ou plusieurs gradins (9) et définissant un espace tronc-conique et un rayon croissant vers le haut, est pourvu autour de l'ouverture (4) pour le remplissage de l'électrolyte.

EP 0 170 066 B1

FIG. 3

FIG. 4

FIG. 5

FIG. 2

FIG. 1